# EUROPÄISCHE PATENTSCHRIFT

(11) **EP 3 191 789 B1**
(45) Veröffentlichungstag und Bekanntmachung des Hinweises auf die Patenterteilung: **08.04.2020**
(21) Anmeldenummer: 15763271.2
(22) Anmeldetag: 07.09.2015
(51) Int. Cl.: F42B 4/20, F42B 4/24

(54) **VERÄNDERBARE FEUERWERKSBATTERIE**
VARIABLE FIREWORK BATTERY
BATTERIE DE FEU D'ARTIFICE MODIFIABLE

(30) Priorität: 08.09.2014 DE 102014112905
(43) Veröffentlichungstag der Anmeldung: 19.07.2017
(73) Patentinhaber: Thieme, Ringo, 14822 Borkwalde (DE)
(72) Erfinder: Thieme, Ringo, 14822 Borkwalde (DE)
(74) Vertreter: Bals, Rüdiger
(86) Internationale Anmeldenummer: PCT/EP2015/070379
(87) Internationale Veröffentlichungsnummer: WO 2016/037979

(56) Entgegenhaltungen:
- DE-A1-102010 016 642
- DE-C1- 3 923 109
- DE-U1- 20 213 633
- DE-U1- 29 504 875
- FR-A1- 2 854 946
- JP-A- H07 218 193
- JP-A- 2004 132 675
- JP-U- H0 188 199
- JP-U- H0 194 798
- JP-U- H0 473 800
- US-A- 769 616
- US-A- 1 291 584

## Beschreibung

Die vorliegende Erfindung betrifft eine Feuerwerksbatterie nach dem Oberbegriff von Anspruch 1. Eine solche Feuerwerksbatterie ist aus der DE 295 04 875 U1 bekannt. Außerdem betrifft die vorliegende Erfindung ein Verfahren zum Vergrößern der Standfläche einer Feuerwerksbatterie gemäß dem Oberbegriff von Anspruch 14.

Aus dem allgemeinen Stand der Technik ist bekannt, Feuerwerksbatterien mit einer Bodenplatte auszustatten, wobei durch Erweiterungselemente die Standfläche der Feuerwerksbatterie vergrößert wird. Hierdurch wird eine erhöhte Standsicherheit hergestellt, indem die Erweiterungselemente, welche an der Grundplatte angeordnet sind, jeweils um eine horizontale Gelenkachse in Richtung des Untergrundes aufklappbar sind. Eine solche Feuerwerksbatterie ist z. B. in der Druckschrift EP 1 262 730 B1 offenbart. Darüber hinaus wird in der Druckschrift DE 10 2010 016 642 A1 eine Möglichkeit zur Vergrößerung der Standfläche offenbart, bei der die Erweiterungselemente um eine Drehachse herumgedreht werden können, sodass dadurch die Standfläche der Feuerwerksbatterie vergrößert wird.

Zuvor genannte Lösungen haben jedoch den Nachteil, dass durch zusätzliche Erweiterungselemente das Packmaß der Feuerwerksbatterie oft vergrößert wird, je größer die Erweiterungselemente ausgeprägt sind. Gestaltet man die Erweiterungselemente jedoch zu klein, um das Packmaß gering zu halten, ist eine notwendige Standsicherheit nicht mehr gegeben, sodass hierbei zwischen dem gewünschten Packmaß und der gewünschten Standsicherheit abgewogen werden muss. Insbesondere bei Feuerwerksbatterien ist das Packmaß für den Transport von erhöhter Bedeutung, da die Transportkosten aufgrund der erhöhten Explosionsgefahr sehr hoch sind. Dementsprechend ist es von Herstellern gewünscht, das Packmaß möglichst gering zu halten, um die Transportkosten so gering wie möglich zu halten, gleichzeitig aber die geforderten Sicherheitsvorschriften bei der Anwendung der Feuerwerksbatterien einzuhalten.

Es ist daher die Aufgabe der vorliegenden Erfindung, die voranstehend beschriebenen Nachteile bei einer Feuerwerksbatterie zumindest teilweise zu beheben. Insbesondere ist es die Aufgabe der vorliegenden Erfindung, eine Feuerwerksbatterie und ein Verfahren zum Vergrößern der umrandeten Standfläche einer Feuerwerksbatterie zu schaffen, wobei gleichzeitig auf einfache und kostengünstige Art und Weise das Packmaß der Feuerwerksbatterie verringert wird.

Die voranstehende Aufgabe wird gelöst durch eine Feuerwerksbatterie sowie ein Verfahren zum Vergrößern der Standfläche einer Feuerwerksbatterie mit den Merkmalen der Ansprüche 1 und 14. Weitere Merkmale und Details der Erfindung ergeben sich aus den Unteransprüchen, der Beschreibung und den Zeichnungen. Dabei gelten Merkmale und Details, die im Zusammenhang mit der Feuerwerksbatterie beschrieben sind, selbstverständlich auch im Zusammenhang mit dem erfindungsgemäßen Verfahren und jeweils umgekehrt, sodass bezüglich der Offenbarung zu den einzelnen Erfindungsaspekten stets wechselseitig Bezug genommen wird bzw. werden kann.

Die erfindungsgemäße Feuerwerksbatterie weist wenigstens ein Aufnahmeteil für wenigstens einen pyrotechnischen Satz und eine Umrandung auf, welche über wenigstens ein Gelenkteil mit einem weiteren Aufnahmeteil und/oder einem die Umrandung weiterführenden Erweiterungselement verbunden ist, das an einem Aufnahmeteil angeordnet ist, wobei die Drehachse des Gelenkteils vertikal zu einem Boden angeordnet ist. Die geometrische Anordnung des Aufnahmeteils und/oder des Erweiterungselementes ist relativ zueinander bewegbar, wodurch eine umrandete Standfläche der Feuerwerksbatterie vergrößert ist.

Als Aufnahmeteil ist hierbei ein geometrischer Körper zu verstehen, in oder an dem wenigstens ein pyrotechnischer Satz anordbar ist. Bei einem pyrotechnischen Satz handelt es sich um ein Stoffgemisch zur Erzeugung akustischer, optischer, thermischer oder mechanischer Effekte, wobei das Gemisch aus explosionsgefährlichen Stoffen besteht, die entsprechenden rechtlichen Regelungen unterliegen, wodurch die Kosten für den Transport und die Lagerung erhöht sind. Die Umrandung der Feuerwerksbatterie wird durch sämtliche Außenflächen der erfindungsgemäßen Aufnahmeteile und Erweiterungselemente gebildet, sodass sich eine umrandete Standfläche ergibt. Ein Erweiterungselement unterscheidet sich vom einem Aufnahmeteil dadurch, dass in dem Erweiterungselement keine pyrotechnischen Sätze angeordnet sind und somit lediglich als Umrandung und Auflagefläche dienen. Der Begriff "Boden" beschreibt erfindungsgemäß jeden Untergrund, der einer erfindungsgemäßen Feuerwerksbatterie für den Verwendungszweck, d. h. in der Gebrauchsstellung, dient. Die vertikale Anordnung der Drehachse eines Gelenkteils steht somit bildlich gesprochen aus dem Boden heraus.

Durch eine erfindungsgemäße Feuerwerksbatterie wird dementsprechend die Standfestigkeit und somit die Sicherheit aufgrund der vergrößerten Standfläche deutlich erhöht. Dies wird insbesondere dadurch realisiert, dass die Aufnahmeteile und/oder die Erweiterungselemente zueinander hin- bzw. voneinander wegbewegt werden können, sodass entweder die Standfläche vergrößert oder das Packmaß verringert wird. Darüber hinaus ermöglicht eine veränderbare geometrische Anordnung, das Erscheinungsbild des pyrotechnischen Satzes durch unterschiedliche Anordnungen zu beeinflussen. Weiterhin bietet die aufgespannte Umrandung zusätzlich Fläche für Sicherheitshinweise, Gebrauchshinweise oder Werbeinformationen.

Im Rahmen der Erfindung ist zumindest ein Aufnahmeteil und/oder zumindest ein Erweiterungselement mit zumindest einem klappbaren Stützelement fixiert. Hierbei kann das Stützelement vollflächig, teilflächig oder lediglich stegartig im Vergleich zum Aufnahmeteil oder Erweiterungselement ausgebildet sein. Das Stützelement ist hierbei von einer Transportstellung in eine Gebrauchsstellung um eine horizontale Achse klappbar, wobei in der Transportstellung das Erweiterungselement lediglich geringen Einfluss auf das Packmaß hat und in der Gebrauchsstellung das Stützelement das Aufnahmeteil und/oder das Erweiterungselement in einer aufgeklappten Lage verstärkt ist. Hierdurch wird das Aufnahmeteil und/oder das Erweiterungselement in seiner aufgeklappten Form gehalten, sodass die Stabilität hierdurch zusätzlich erhöht wird und ein Verschieben des mindestens einen Aufnahmeteils oder des mindestens einen Erweiterungselementes verhindert wird. Darüber hinaus bietet die Fläche des Stützelementes ebenfalls zusätzliche Möglichkeiten, Gefahrenhinweise, Anleitungen oder Werbeinformationen zu platzieren.

Das zumindest eine Stützelement wird hierbei an dem Aufnahmeteil oder dem Erweiterungselement angeordnet, sodass es im ausgeklappten Zustand in Richtung der umrandeten Standfläche zeigt und gegen mindestens eine Fläche des Aufnahmeteils und/oder des Erweiterungselementes zum Anschlag kommt. Das Stützelement kann erfindungsgemäß entlang der vertikalen Achse, also der Höhe der Feuerwerksbatterie, beliebig in einer horizontalen Lage angeordnet werden. Hierdurch ergibt sich eine nahezu parallel zum Boden angeordnete Fläche, die durch das Stützelement gebildet ist. Je nach Ausgestaltung des erfindungsgemäßen Stützelementes ergibt sich ein Klemmeffekt dadurch, dass das Stützelement eine größere geometrische Form aufweist, als die Fläche, die durch das mindestens eine Aufnahmeteil und das wenigstens eine Erweiterungselement aufgespannt wird.

Des Weiteren ist es denkbar, dass die umrandete Standfläche eine geschlossene oder eine offene Umrandung aufweisen kann. Folglich kann die Umrandung an einer Stelle unterbrochen sein, wodurch sich weitere geometrische Anordnungen des Aufnahmeteils und/oder des Erweiterungselementes ergeben. Die Begrenzung auf eine bestimmte geometrische Form, die durch eine durchgehende Umrandung bestimmt wird, kann durch eine offene Umrandung aufgehoben werden. Dadurch ergibt sich auch der Vorteil, dass die Anordnung der Feuerwerksbatterie individuell angepasst werden kann. Darüber hinaus ergeben sich dadurch weitere Faltmöglichkeiten, durch welche das Packmaß verringert werden kann. Eine geschlossene Umrandung hat den Vorteil, dass die Stabilität, insbesondere in der Gebrauchsstellung, deutlich erhöht gegenüber einer geöffneten Umrandung ist.

Erfindungsgemäß kann das zumindest eine Stützelement von einem klappbaren Halteelement gehalten werden. Dementsprechend wird die Stabilität der Feuerwerksbatterie, insbesondere die Stabilität des Stützelementes zusätzlich verstärkt. Ein klappbares Halteelement wird um eine vertikale Drehachse von einer Transportstellung, in der das Halteelement an einem Aufnahmeteil oder einem Erweiterungselement anliegt, in eine Gebrauchsstellung geklappt, in der eine Kante des Halteelementes mit einer Fläche eines Stützelementes zum Anschlag kommt, sodass diese gegen eine Bewegung in vertikaler Richtung zumindest in Teilen sicherbar ist. Entsprechend vorteilhaft ergibt sich eine abstützende Wirkung wenn die Fläche des Stützelementes in vertikaler Richtung belastet wird.

Vorteilhaft ist es ebenfalls, wenn ein mechanischer Ausklappwiderstand des zumindest einen Aufnahmeteils und/oder des zumindest einen Erweiterungselementes durch eine Klebeverbindung, eine Klettverbindung, eine Perforierung oder einen Faden aus Zellstoff herstellbar ist. Ein Ausklappwiderstand verhindert ein ungewolltes Aufklappen der Feuerwerksbatterie, sodass diese bis zum Lösen des Aufklappwiderstandes, in seiner Transportstellung gehalten wird. Eine Klebeverbindung hat zum Vorteil, dass diese vergleichsweise günstig und ohne großen Aufwand herstellbar ist. Eine Perforierung hat den Vorteil, dass sie stabil und dabei trotzdem gut auftrennbar ist, insbesondere zur Ausgestaltung eines Gelenkteils, wodurch die Umrandung an dieser Stelle leicht auftrennbar ist. Ein Ausklappwiderstand hergestellt aus einem Zellstoff, z. B. in Form eines Fadens oder eines Papierstreifens, hat den Vorteil einer stabilen und gleichzeitig kostengünstigen Ausgestaltung.

Erfindungsgemäß ist es denkbar, dass mindestens zwei Flächen von einem Aufnahmeteil und/oder einem Erweiterungselement eine Gehrung aufweisen kann. Die Gehrung bildet dabei die Winkelhalbierende des Winkels, mit dem die beiden Teile korrelieren. Dadurch passen beide Flächen genau aufeinander, was zu einem stufenlosen Übergang zwischen den beiden Teilen führt. Sind bspw. zwei Aufnahmeteile in einem Winkel von 90° angeordnet, so wird die Gehrung durch einen Winkel von 45° an den Enden des Aufnahmeteils gebildet. Dadurch ergibt sich der Vorteil, dass die Kontakt- bzw. Verbindungfläche vergrößert wird, was die Stabilität erhöht. Darüber hinaus fällt die sogenannte Stoßfuge beider Teile auf eine Kante und tritt dadurch weniger in Erscheinung. Entsprechende Vorteile ergeben sich insbesondere bei einer Gehrung der Aufnahmeteile, da hierbei ein bündiger und stabiler Halt durch die im Vergleich zum Erweiterungselement vergrößerte Stoßfuge, insbesondere bei einer Nutzung ohne Erweiterungselemente, entsteht. Eine erfindungsgemäße Gehrung ist dabei jedoch nicht auf die zuvor erwähnten 45° bzw. die winkelhalbierende Ausgestaltung beschränkt. Hierbei ist es zusätzlich denkbar, dass durch Klebepunkte an der Kontakt- bzw. Verbindungsfläche die gewünschte Position zusätzlich fixierbar ist.

Im Rahmen der Erfindung ist es denkbar, dass das Erweiterungselement nicht dieselbe Höhe wie ein Aufnahmeteil aufweist. Der Vorteil dabei ergibt sich durch die Materialersparnis und einer damit verbundenen Kostenreduzierung sowie der umweltfreundlichen Ressourcenschonung. Gleichzeitig wird hierdurch eine Gewichtsreduzierung realisiert, was zu weiteren Einsparungen bei den Versand- und Transportkosten führt. Da bei einer erfindungsgemäßen Feuerwerksbatterie die aufgespannte Standfläche nicht durch die größte Fläche des Erweiterungselementes, sondern durch eine Kante des Erweiterungselementes vergrößert wird, kann die Höhe beliebig ausgestaltet sein. Dementsprechend kann das Erweiterungselement gemäß der gewünschten Stabilität sowie der optionalen Aufnahme eines Stütz- oder Halteelementes, dimensioniert werden.

Es kann von Vorteil sein, wenn das zumindest eine Stützelement aus einem Aufnahmeteil und/oder einem Erweiterungselement herausklappbar ist. Der Begriff "heraus" ist hierbei derart zu verstehen, dass ein erfindungsgemäßes Stützelement innerhalb der mindestens einen Fläche eines Aufnahmeteils und/oder eines Erweiterungselementes geformt ist, sodass es aus dieser Fläche herausklappbar ist, ohne zusätzliches Material anzubringen.

Analog hierzu kann es sich auch um ein Halteelement handeln. Neben der Platzersparnis können auch die Materialkosten gesenkt werden. Damit ein entsprechendes Stützelement, bzw. ein Halteelement in einer entsprechenden Transportposition gehalten werden, ist auch hier eine Fixierung der Elemente durch eine Klebeverbindung, eine Perforation oder eine Zellstoffverbindung denkbar.

Vorteilhaft ist es ebenfalls, wenn zumindest ein Gelenkteil Metall und/oder Kunststoff und/oder Zellstoff aufweist. Metall hat hierbei den Vorteil, dass es eine hohe Dauerfestigkeit aufweist und gegen Umwelteinflüsse wie Regen oder Schnee unempfindlich ist, wodurch die Haltbarkeit der Feuerwerksbatterie, insbesondere des Gelenkteils, erhöht ist. Vergleichbares gilt auch für die Ausgestaltung eines Kunststoffgelenkteils, wobei zusätzlich Material-, und Herstellungskosten verringert werden können. Zellstoff ist besonders umweltfreundlich, da es nahezu CO2-neutral aus nachwachsenden Rohstoffen fertigbar ist und gleichzeitig die Materialkosten gering gehalten werden können.

Des Weiteren ist es denkbar, dass zumindest ein Gelenkteil eine Perforation aufweisen kann, wodurch die Umrandung auftrennbar ist. Dementsprechend ist die Verbindung im Anwendungsfall leicht trennbar, sodass keine zusätzlichen Hilfsmittel zum Öffnen benötigt werden. Nach dem Auftrennen des Gelenkteils entlang der Perforation ist die Anordnungsvariabilität deutlich erhöht, wodurch sich zahlreiche Möglichkeiten der Positionierung ergeben. Die Perforation hat zudem den Vorteil, sollte diese nicht aufgetrennt werden, besteht eine ausreichende Stabilität der Umrandung, ohne dass hierzu zusätzliches Verstärkungsmaterial benötigt wird.

Erfindungsgemäß ist zumindest eine Zündschnur in der Feuerwerksbatterie angeordnet, wodurch der zumindest eine pyrotechnische Satz entzündbar ist. Der Benutzer kann somit im Anwendungsfall die pyrotechnische Wirkung durch einfaches Entzünden der Zündschnur hervorrufen. Darüber hinaus ist es denkbar, dass eine Zündschnur an einem Aufnahmeteil und/oder einem Erweiterungselement angeordnet ist, insbesondere dass das eine Zündschnurende aus der Umrandung herausragt. Dementsprechend ist das Zündschnurende im Anwendungsfall leicht zugänglich, sodass eine gesicherte Entzündung des Zündschnurendes ermöglicht ist, ohne ein Aufnahmeteil oder ein Erweiterungselement zu übergreifen. Hierbei ist es denkbar, dass das eine Zündschnurende aus der Umrandung herausklappbar ist, sodass dieses vor Umwelteinflüssen geschützt ist. Auch eine Fixierung des aus der Umrandung herausragenden Zündschnurendes an einem Aufnahmeteil oder einem Erweiterungselement ist vorstellbar. Das andere Zündschnurende ragt erfindungsgemäß in ein Aufnahmeteil oder ein Erweiterungselement hinein und verläuft bis zumindest zu einem pyrotechnischen Satz, sodass dieser bei gezündeter Zündschnur seine beabsichtigte pyrotechnische Wirkung erzielen kann.

Der Erfindung entsprechend sind durch die Zündschnur zumindest zwei Aufnahmeteile pyrotechnisch miteinander verbindbar, insbesondere ist die Zündschnur durch zumindest ein Gelenkteil führbar, sodass nur ein einmaliges Entzünden zum Start von einer Mehrzahl pyrotechnischer Sätze notwendig ist. Dies ermöglicht es, mehrere pyrotechnische Sätze im Anwendungsfall, durch Entzünden lediglich eines Zündschnurendes zu erzielen. Darüber hinaus ist eine Verlegung der Zündschnur durch zumindest ein Gelenkteil vor Umwelteinflüssen geschützt, sodass die Funktionsfähigkeit weiter erhöht wird. Besteht die Feuerwerksbatterie bspw. aus einer Mehrzahl an Aufnahmeteilen und/oder Erweiterungselementen, ermöglicht eine erfindungsgemäße Verlegung der Zündschnur, trotz einer Veränderung der geometrischen Anordnung der Aufnahmeteile und/oder Erweiterungselemente zueinander, dass durch einmaliges Entzünden der Zündschnur sämtliche pyrotechnische Sätze der Feuerwerksbatterie entzündbar sind.

Des Weiteren ist es denkbar, dass zumindest eine weitere Zündschnur an einem Aufnahmeteil und/oder einem Erweiterungselement anordbar ist, wobei das eine Zündschnurende aus der Umrandung herausragt. Auch hierbei ragt das andere Zündschnurende in den zumindest einen pyrotechnischen Satz, sodass dieser nach Entzünden der Zündschnur die gewünschte pyrotechnische Wirkung hervorrufen kann. Eine zweite Zündschnur erhöht die Zuverlässigkeit der Feuerwerksbatterie, so dass bei Versagen der ersten Zündschnur trotzdem der pyrotechnische Effekt erzielbar ist. Auch die zweite Zündschnur kann durch zumindest ein Gelenkteil führbar sein, sodass nur ein einmaliges Entzünden beim Einsatz mehrerer pyrotechnischer Sätze notwendig ist.

Erfindungsgemäß kann zumindest ein Aufnahmeteil und/oder ein Erweiterungselement und/oder ein Gelenkteil einen Zellstoff, einen Kunststoff, Holz oder Metall aufweisen. Die Verwendung von Zellstoff ist hierbei besonders umweltfreundlich, da eine Herstellung mit nachwachsenden Rohstoffen ermöglicht wird, wobei gleichzeitig geringe Materialkosten entstehen. Die Verwendung eines Kunststoffes bietet den Vorteil einer langen Haltbarkeit sowie eine hohe Widerstandsfähigkeit gegenüber Umwelteinflüssen sowie Krafteinwirkungen, verursacht durch den Transport oder unsachgemäßer Behandlung. Ähnliche Eigenschaften ergeben sich auch bei der Verwendung eines Metalls, wobei zusätzlich ein ökologischer Vorteil durch Materialrecycling erzielbar ist.

Des Weiteren ist es denkbar, dass in die Standfläche, insbesondere auf die Halteelemente, zumindest ein weiterer pyrotechnischer Satz aufnehmbar ist. Durch die vergrößerte umrandete Standfläche der Feuerwerksbatterie im ausgeklappten Zustand, wird neuer Platz geschaffen in den zumindest ein weiterer pyrotechnischer Satz aufnehmbar ist, der in einem zusammengeklappten Zustand der Feuerwerksbatterie keinen Platz findet. Somit wird die Standfläche zu einem Aufnahmeteil für zumindest einen pyrotechnischen Satz, wodurch die Stabilität der Feuerwerksbatterie weiter erhöht wird. Darüber hinaus wird durch eine Mehrzahl an pyrotechnischen Sätzen innerhalb der Standfläche die optische Gestaltung und Anzahl der pyrotechnischen Effekte positiv beeinflusst.

Vorteilhaft ist es ebenfalls, wenn zumindest ein weiterer pyrotechnischer Satz durch zumindest ein Stützelement und/oder ein Halteelement fixierbar ist. Ein nachträglich eingebrachter pyrotechnischer Satz wird dementsprechend gegen ein Verschieben und/oder eine ungewollte Positionsänderung gesichert, wodurch auch die Sicherheit der Feuerwerksbatterie erhöht wird. Ein nachträglich eingebrachter pyrotechnischer Satz kann hierzu gegen zumindest ein Stützelement und/oder ein Halteelement zum Anschlag kommen und somit in seiner Position fixiert werden.

Erfindungsgemäß kann das zumindest eine Aufnahmeteil und/oder das zumindest eine Erweiterungselement in einem Bereich von 0° bis 180° zueinander bewegbar sein, insbesondere in einem Bereich von 30° bis 120°, vorzugsweise in einem Bereich von 45° bis 90°.

Gemäß einem weiteren Aspekt der Erfindung ist ein Verfahren zum Verschwenken einer Feuerwerksbatterie beansprucht, aufweisend wenigstens ein Aufnahmeteil für wenigstens einen pyrotechnischen Satz mit einer Umrandung, welche über wenigstens ein Gelenkteil mit einem weiteren Aufnahmeteil und/oder einem die Umrandung weiterführenden Erweiterungselement verbunden ist, das in einem Aufnahmeteil angeordnet ist, wobei die Drehachse des Gelenkteils vertikal zu einem Boden angeordnet ist. Die geometrische Anordnung des Aufnahmeteils und/oder des Erweiterungselementes ist zueinander relativ bewegbar, wodurch eine umrandete Standfläche der Feuerwerksbatterie vergrößert ist.

Bei den beschriebenen Erfahrungen ergeben sich sämtliche Vorteile, die bereits zu der erfindungsgemäßen Feuerwerksbatterie beschrieben worden sind.

Weitere, die Erfindung verbessernde Maßnahmen ergeben sich aus der nachfolgenden Beschreibung zu einigen Ausführungsbeispielen von Feuerwerksbatterien, welche in den Figuren schematisch dargestellt sind. Sämtliche aus den Ansprüchen, der Beschreibung oder der Zeichnungen hervorgehenden Merkmale und/oder Vorteile, einschließlich konstruktiver Einzelheiten, räumlicher Anordnungen und Verfahrensschritte, können sowohl für sich, als auch in den verschiedensten Kombinationen erfindungswesentlich sein. Es zeigen jeweils schematisch:
Fig. 1: eine erste, nicht beanspruchte, Ausführungsform einer Feuerwerksbatterie in der Transportstellung;
Fig. 2: die erste Ausführungsform in einer ersten Gebrauchsstellung;
Fig. 3: die erste Ausführungsform in einer weiteren Gebrauchsstellung;
Fig. 4: eine zweite, nicht beanspruchte, Ausführungsform einer Feuerwerksbatterie ohne Erweiterungselement aber mit einem Stützelement;
Fig. 5: die zweite Ausführungsform mit einem zusätzlichen pyrotechnischen Satz;
Fig. 6: eine erfindungsgemäße dritte Ausführungsform einer Feuerwerksbatterie in einer ersten Gebrauchsstellung;
Fig. 7: die dritte Ausführungsform feiner Feuerwerksbatterie in einer weiteren Gebrauchsstellung;
Fig. 8: die dritte Ausführungsform einer Feuerwerksbatterie mit Stützelementen;
Fig. 9: eine erfindungsgemäße vierte Ausführungsform einer Feuerwerksbatterie in der Transportstellung;
Fig. 10: die vierte Ausführungsform einer Feuerwerksbatterie in einer ersten Gebrauchsstellung; und
Fig. 11: die vierte Ausführungsform einer Feuerwerksbatterie in einer weiteren Gebrauchsstellung.

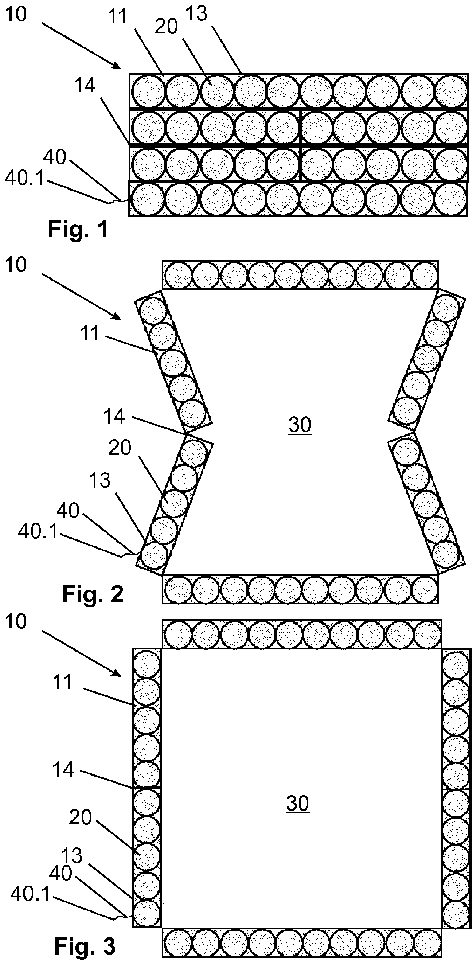

Elemente mit gleicher Funktion und Wirkungsweise sind in den Figuren 1 bis 11 jeweils mit denselben Bezugszeichen versehen.

In Figur 1 ist schematisch eine, nicht-beanspruchte, erste Ausführungsform einer Feuerwerksbatterie 10 in der Transportstellung aufgezeigt, welche hier beispielhaft sechs Aufnahmeteile 11 aufweist. Jedes Aufnahmeteil 11 ist mit einer Vielzahl von pyrotechnischen Sätzen 20 ausgestattet, die einreihig in den Aufnahmeteilen 11 angeordnet sind. Jedes Aufnahmeteil 11 weist eine Umrandung 13 und jeweils zwei Gelenkteile 14 auf. In der dargestellten Transportstellung sind die Aufnahmeteile 11 unmittelbar aneinander angeordnet, sodass kein Zwischenraum zwischen den einzelnen Aufnahmeteilen 11 entsteht, wodurch die aufgespannte Standfläche 30 und das Packmaß der Feuerwerksbatterie 10 kleinstmöglich ist. Die in der Figur 1 dargestellte Feuerwerksbatterie 10 weist eine rechteckige Form auf, wobei die Längsseiten nach außen hin zwei Aufnahmeteile 11 aufweisen, die in ihrer Länge doppelt so lang wie die innenliegenden Aufnahmeteile11 ausgeführt sind. Somit ergibt sich eine Anordnung von zwei längeren Aufnahmeteilen 11 an den beiden Längsseiten, zwischen denen vier halb so lange Aufnahmeteile 11 angeordnet sind. Die von der Umrandung 13 umgebene Fläche der Feuerwerksbatterie 10 ist in der Transportstellung genauso groß, wie die Summe der Flächen sämtlicher Aufnahmeteile 11. An einem Aufnahmeteil 11 der Feuerwerksbatterie 10 ist eine Zündschnur 40 mit einem Zündschnurende 40.1 gezeigt, wobei das zweite Zündschnurende, welches in den zumindest einen pyrotechnischen Satz 20 hineinragt, nicht weiter dargestellt ist.

Die Figur 2 zeigt schematisch die Feuerwerksbatterie 10 in einer ersten Gebrauchsstellung, in der die von der Umrandung 13 umgebene Standfläche 30 der Feuerwerksbatterie 10 gegenüber der in Figur 1 dargestellten Feuerwerksbatterie 10 deutlich vergrößert ist. Die beiden die Längsseite bildenden Aufnahmeteile 11 sind in einer ersten Gebrauchsstellung deutlich beabstandet zueinander angeordnet, sodass sich eine Standfläche 30 zwischen sämtlichen Aufnahmeteilen 11 gebildet hat. Die vier kürzeren Aufnahmeteile 11, die zuvor in der Transportstellung zwischen den die Längskante bildenden Aufnahmeteile 11 angeordnet waren, berühren sich in der ersten Gebrauchsstellung lediglich noch an den Gelenkteilen 14 und nicht mehr entlang ihrer Längs- bzw. Querseite. Dementsprechend verändert sich auch die Anordnung der pyrotechnischen Sätze 20 der Feuerwerksbatterie 10 zueinander. Dabei bildet sich zwischen den einzelnen Aufnahmeteilen 11 ein spitzer bzw. ein stumpfer Winkel, der durch Verschieben der Aufnahmeteile zueinander veränderbar ist.

Die Figur 3 zeigt die erste Ausführungsform der Feuerwerksbatterie 10 in einer weiteren Gebrauchsstellung, wobei die umrandete Standfläche 30 in der gezeigten Stellung größtmöglich ist. Wie zu erkennen ist, sind in der weiteren Gebrauchsstellung alle Seiten der Feuerwerksbatterie 10 gleich lang, sodass sich eine rechteckige Standfläche 30 bildet, die von der Umrandung 13 umgeben ist. An den vier Ecken der Standfläche 30 stehen die Aufnahmeteile 11 in einem rechten Winkel zueinander und berühren sich hierbei nur noch über die Gelenkteile 14. Zwei der halblangen Aufnahmeteile 11 haben in der zweiten Gebrauchsstellung eine gemeinsame Stoßfläche entlang der kurzen Seite des Aufnahmeteils 11, sodass sie entlang der Längsseite eine gemeinsame Gerade bilden, die in der Summe die gleiche Länge aufweist, wie die langen Aufnahmeteile 11. In der dargestellten Gebrauchsstellung hat sich die aufgespannte Standfläche 30 gegenüber der in Figur 1 gezeigten Transportstellung verdoppelt, wodurch eine erhöhte Standsicherheit realisiert ist. Auch die Umrandung 13 hat in der Figur 3 dargestellten Gebrauchsstellung einen größtmöglichen sichtbaren Umfang, wodurch sich die Umfangsfläche dementsprechend auch vergrößert. Diese Fläche kann z. B. für Informations- und Werbezwecke verwendet werden.

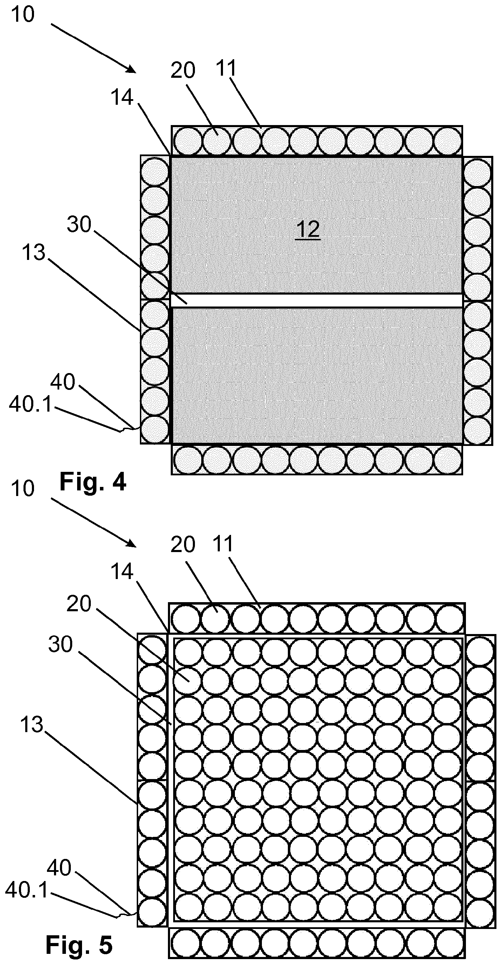

In Figur 4 ist eine, nicht-beanspruchte, zweite Ausführungsform einer Feuerwerksbatterie 10 dargestellt, wobei die Feuerwerksbatterie 10 in der zweiten Ausführungsform zwei Stützelemente 12 aufweist, die in der dargestellten ausgeklappten Position die Aufnahmeteile 11 in der Gebrauchsstellung halten. Die Stützelemente 12 sind erfindungsgemäß mit der einen Längsseite der Aufnahmeteile 11 über ein Gelenkteil 14 verbunden und können in der Transportstellung um das Gelenkteil 14 geklappt werden, sodass die Fläche der Stützelemente 12 an der einen Fläche des langen Aufnahmeteils 11 anliegt, sodass in der Transportstellung die Feuerwerksbatterie 10 die in der Figur 1 gezeigte Form annimmt. Die Stützelemente 12 können erfindungsgemäß unterschiedliche Größen aufweisen und müssen nicht über die komplette Längsseite der Aufnahmeteile 11 zum Anschlag kommen. Die in der Figur 4 gezeigten Stützelemente 12 weisen eine große Stützwirkung für die Aufnahmeteile 11 auf, da sie einen Großteil der Standfläche 30 bedecken und somit entlang der nahezu kompletten Längsseite der Aufnahmeteile 11 zum Anschlag kommen.

Durch die Stützelemente 12 ergibt sich darüber hinaus eine Abdeckung der Standfläche 30, sodass auf dieser aufgespannten Fläche zum einen weitere Informationen und/oder Werbung dargestellt werden können und zum anderen eine gegenüber von Umwelteinflüssen geschützte Fläche ergibt, auf der weitere pyrotechnische Sätze 20 angeordnet werden können. Somit ist es vorstellbar, dass die Stützelemente 12 aus einem Material bestehen, das zumindest teilweise feuchtigkeitsgeschützt und/oder hemmend ausgeführt ist, wodurch die Stabilität der Stützelemente 12 durch Feuchtigkeit keine negativen Auswirkungen hat.

Die Figur 5 zeigt die zweite Ausführungsform einer Feuerwerksbatterie 10, bei der in der aufgespannten Standfläche 30 eine Mehrzahl an pyrotechnischen Sätzen 20 angeordnet sind. In der dargestellten Gebrauchsstellung bilden die Aufnahmeteile 11 eine quadratische Standfläche 30, die genügend Platz für weitere pyrotechnische Sätze 20 bildet. Hierbei ist es denkbar, dass weitere pyrotechnische Sätze 20 auf einem Träger angeordnet sind, der in der Gebrauchsstellung der Feuerwerksbatterie 10 zwischen die Aufnahmeteile 11 auf die Standfläche 30 angeordnet wird, sodass die Anzahl der pyrotechnischen Sätze 20 deutlich erhöht ist, wodurch die pyrotechnischen Effekte der Feuerwerksbatterie 10 eine größere Vielfalt im Erscheinungsbild ergeben.

Somit ergibt sich durch die Anordnung der zusätzlichen pyrotechnischen Sätze 20 auf einem Träger in der Standfläche 30 ein vergleichbarer Effekt, wie er durch die Stützelemente 12 erreicht wird. Auf diese Weise wird ein Verschieben der Aufnahmeteile 11 aus der Gebrauchsstellung in die Transportstellung verhindert, sodass eine erhöhte Sicherheit gewährleistet wird. Dementsprechend ergeben sich in der dritten Ausführungsform gemäß Figur 5 zahlreiche Vorteile, die sich neben der erhöhten Sicherheit auch durch positive Beeinflussung der pyrotechnischen Effekte bzw. der Anzahl der pyrotechnischen Effekte ergeben.

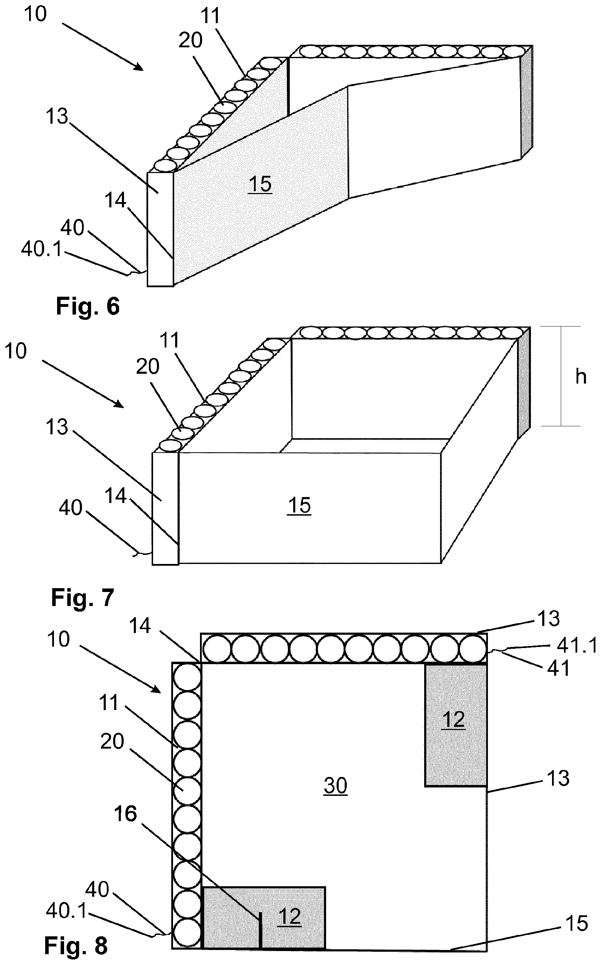

In der Figur 6 ist eine erfindungsgemäße dritte Ausführungsform einer Feuerwerksbatterie 10 dargestellt, welche lediglich zwei Aufnahmeteile 11 mit einer Höhe h aufweist, die pyrotechnische Sätze 20 aufnehmen. Zusätzlich zu den zwei Aufnahmeteilen 11 weist die dritte Ausführungsform in Figur 6 zwei Erweiterungselemente 15 auf, welche die Umrandung 13 der Feuerwerksbatterie 10 verlängern. Zwischen den Aufnahmeteilen 11 und den Erweiterungselementen 15 sind jeweils Gelenkteile 14 angeordnet, sodass sowohl die Aufnahmeteile 11, als auch Erweiterungselemente 15 gegeneinander verschwenkbar sind. In der dargestellten Ausführungsform ergibt sich eine pfeilspitzenähnliche Form der Feuerwerksbatterie 10, die durch die beiden Aufnahmeteile 11, die in einem rechten Winkel zueinander angeordnet sind und den beiden Erweiterungselementen 15, die in einer ersten ausgeklappten Stellung derart angeordnet sind, dass das Gelenkteil 14 zwischen den beiden Aufnahmeteilen 11 und das Gelenkteil 14 zwischen den beiden Erweiterungselementen 15 eine Flucht bildet. Die Erweiterungselemente 15 vergrößern somit zum einen die umrandete Standfläche 30, als auch den Umfang der Umrandung 13 selbst. Hierdurch wird die Standsicherheit der erfindungsgemäßen Feuerwerksbatterie 10 erhöht.

In der Abbildung weisen die Erweiterungselemente 15 dieselbe Höhe und Länge und somit Gesamtfläche auf, wie die Aufnahmeteile 11. Erfindungsgemäß kann es jedoch vorgesehen sein, dass die Fläche der Erweiterungselemente 15 deutlich verkleinert gegenüber der Fläche der Aufnahmeteile 11 ist. Somit wird zum einen Material eingespart, wodurch sich auch eine Gewichtsreduzierung ergibt, was zu günstigeren Transportkosten führt.

In der Figur 7 ist die dritte Ausführungsform der erfindungsgemäßen Feuerwerksbatterie 10 in einer zweiten Gebrauchsstellung gezeigt, in der die durch die Aufnahmeteile 11 und die Erweiterungselemente 15 aufgespannte Standfläche 30 am Größten ist. Hierbei bilden die Erweiterungselemente 15 und die Aufnahmeteile 11 quadratische Anordnungen, bei der die Standsicherheit der Feuerwerksbatterie 10 entsprechend vergrößert gegenüber der in Figur 6 gezeigten Stellung ist. Gemäß Figur 7 ist eine Zündschnur 40 an dem einen Aufnahmeteil 11 angeordnet, wobei die Zündschnur 40 in nicht dargestellter Form entlang des ersten Aufnahmeteils 11 verläuft und mit dem zweiten Aufnahmeteil 11 durch das Gelenkteil 14 verbunden ist. Dadurch kann durch einmaliges Entzünden des Zündschnurendes 40.1 sowohl die pyrotechnischen Sätze 20 des ersten Aufnahmeteils 11, als auch die pyrotechnischen Sätze 20 des zweiten Aufnahmeteils 11 entzündet werden. Hierdurch ergibt sich eine einfache Handhabung durch ein einmaliges Entzünden der Zündschnur 40. Darüber hinaus ist es denkbar, die Zündschnur 40 durch die Erweiterungselemente 15 zu führen, sodass auch auf diese Weise sowohl die pyrotechnischen Sätze 20 des ersten Aufnahmeteils 11, als auch die pyrotechnischen Sätze 20 des zweiten Aufnahmeteils 11 durch einmaliges Entzünden aktiviert werden können.

Die Figur 8 beschreibt die dritte Ausführungsform einer erfindungsgemäßen Feuerwerksbatterie 10, die im Wesentlichen der in Figur 7 gezeigten Form entspricht, wobei zusätzlich Stützelemente 12 an den Aufnahmeteilen 11 angeordnet sind. Weiterhin ist es denkbar, dass die Stützelemente 12 auch an den Erweiterungselementen 15 angeordnet sein können. Die Stützelemente 12 bewirken wie in Figur 4 dargestellt, eine erhöhte Steifigkeit der erfindungsgemäßen Feuerwerksbatterie 10, sodass ein Verschieben der Aufnahmeteile 11, bzw. der Erweiterungselemente 15 aus der Gebrauchsstellung in die Transportstellung zumindest erschwert ist. Die Stützelemente 12 werden hierbei über ein Gelenkteil 14 mit einem Aufnahmeteil 11 oder mit einem Erweiterungselement 15 verbunden, sodass diese entlang des Gelenkteils 14 klappbar sind. In der Figur 8 ist dabei die Gebrauchsstellung der Stützelemente 12 gezeigt, in der die Stützelemente 12 mit zumindest einer Kante jeweils an dem Erweiterungselement 15 und an dem Aufnahmeteil 11 zum Anschlag kommt. Auch durch die in Figur 8 dargestellten Stützelemente 12 ergeben sich die gleichen Vorteile, die bereits in Figur 4 beschrieben worden sind. Weiterhin in Figur 8 dargestellt ist eine zweite Zündschnur 41 mit einem Zündschnürende 41.1 sowie ein erfindungsgemäßes Halteelement 16, das an einem Erweiterungselement 15 angeordnet ist und gegen ein Stützelement 12 zum Anschlag kommt.

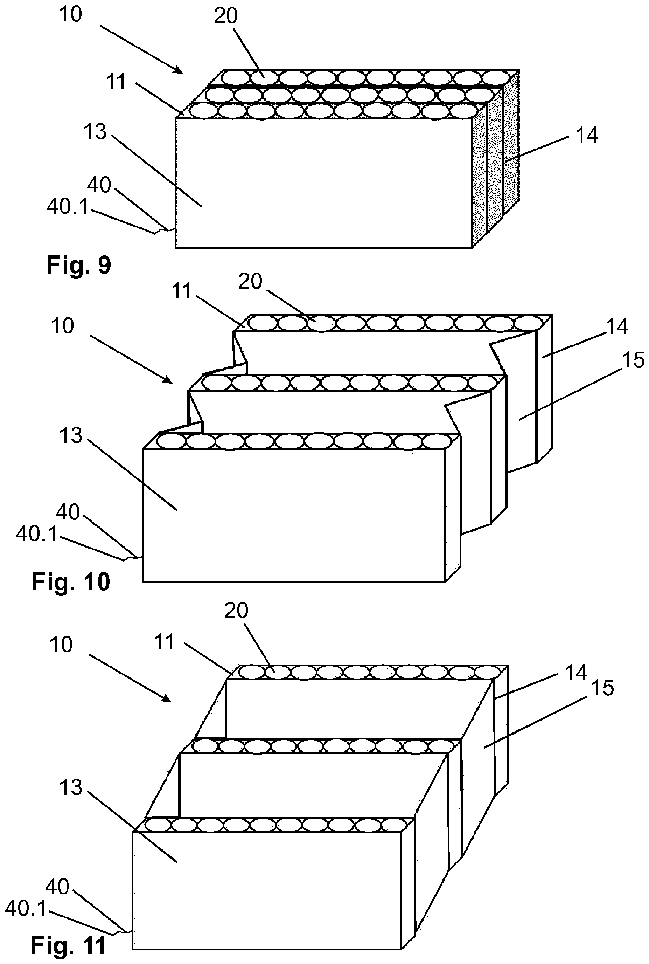

In der Figur 9 ist eine erfindungsgemäße vierte Ausführungsform einer Feuerwerksbatterie 10 dargestellt, die durch drei Aufnahmeteile 11 gebildet werden, in dem eine Mehrzahl von pyrotechnischen Sätzen 20 angeordnet ist. Die Umrandung 13 weist in der dargestellten Transportstellung den kleinstmöglichen Umfang der vierten Ausführungsform auf.

Die Figur 10 zeigt die vierte Ausführungsform einer Feuerwerksbatterie 10, die auch in Figur 9 gezeigt ist, wobei in der gezeigten ersten Transportstellung die zwischen den Aufnahmeteilen 11 angeordneten Erweiterungselemente 15 zu erkennen sind. In der dargestellten ersten Gebrauchsstellung werden die drei Aufnahmeteile 11 ziehharmonikaartig voneinander beabstandet angeordnet, sodass die Erweiterungselemente 15 zwischen den Aufnahmeteilen 11 spitze Winkel aufweisen. Dadurch wird die aufgespannte Standfläche 30 der Feuerwerksbatterie 10 gegenüber der in Figur 9 dargestellten Transportstellung deutlich vergrößert. Die Umrandung 13 wird durch die dargestellten Erweiterungselemente 15 verlängert, sodass durch die Erweiterungselemente 15 die Aufnahmeteile 11 verbunden werden, sodass sich eine erhöhte Standsicherheit der Feuerwerksbatterie 10 ergibt.

Darüber hinaus ist in der Figur 10 eine Zündschnur 40 mit einem Zündschnurende 40.1 dargestellt, die an einem Aufnahmeteil 11 angeordnet ist und zum Entzünden der pyrotechnischen Sätze 20 dient. Erfindungsgemäß kann es vorgesehen sein, dass die Zündschnur 40 durch die Erweiterungselemente 15 geführt ist, sodass die weiteren pyrotechnischen Sätze 20 in den weiteren Aufnahmeteilen 11 mit nur einem Entzünden einer einzigen Zündschnur 40 realisiert werden kann.

Die Figur 11 zeigt die vierte Ausführungsform einer Feuerwerksbatterie 10 in einer zweiten Gebrauchsstellung, in der die aufgespannte Standfläche 30 am Größten ist. Hierbei weisen die Erweiterungselemente 15, gegenüber der in Figur 10 dargestellten Form, eine ebene Fläche auf, sodass die zwischen den Aufnahmeteilen 11 aufgespannte Standfläche 30 am Größten ist.

Je nach Länge der Erweiterungselemente 15 kann der Abstand zwischen den einzelnen Aufnahmeteilen 11 größer oder kleiner ausgestaltet sein. Hierbei werden jedoch die Aufnahmeteile 11 immer parallel zueinander beabstandet angeordnet. Dabei ist es denkbar, dass sowohl eine rechteckige, als auch eine trapezförmige Anordnung der Feuerwerksbatterie 10 ermöglicht wird.

### Bezugszeichenliste

- 10: Feuerwerksbatterie
- 11: Aufnahmeteil
- 12: Stützelement
- 13: Umrandung
- 14: Gelenkteil
- 15: Erweiterungselement
- 16: Haltelement

- 20: pyrotechnischer Satz

- 30: Standfläche
- 40: Zündschnur
- 40.1: Zündschnurende
- 41: Zündschnur
- 41.1: Zündschnurende

- H: Höhe von Aufnahmeteil 11

## Patentansprüche

1. Feuerwerksbatterie (10) mit wenigstens einem Aufnahmeteil (11) für wenigstens einen pyrotechnischen Satz (20) und einer Umrandung (13), welche über wenigstens ein Gelenkteil (14) mit einem weiteren Aufnahmeteil (11) und einem die Umrandung (13) weiterführenden Erweiterungselement (15) verbunden ist, das an einem Aufnahmeteil (11) angeordnet ist, wobei die Umrandung (13) durch sämtliche Außenflächen der Aufnahmeteile (11) und Erweiterungselemente (15) gebildet wird, wobei sich das Erweiterungselement (15) von einem Aufnahmeteil (11) dadurch unterscheidet, dass in dem Erweiterungselement (15) keine pyrotechnischen Sätze (20) angeordnet sind, wobei die Drehachse des Gelenkteils (14) vertikal zu einem Boden angeordnet ist,
wobei die Aufnahmeteile (11) und/oder die Erweiterungselemente (15) zueinander hin- bzw. voneinander wegbewegt werden können, wodurch eine umrandete Standfläche (30) der Feuerwerksbatterie (10) vergrößert ist,
**dadurch gekennzeichnet,**
das zumindest ein Aufnahmeteil (11) und/oder zumindest ein Erweiterungselement (15) mit zumindest einem klappbaren Stützelement (12) fixierbar ist.

2. Feuerwerksbatterie (10) nach Anspruch 1,
**dadurch gekennzeichnet,**
**dass** die Standfläche (30) eine geschlossene oder eine offene Umrandung (13) aufweist.

3. Feuerwerksbatterie (10) nach einem der vorhergehenden Ansprüche,
**dadurch gekennzeichnet,**
**dass** zumindest das Stützelement (12) von einem klappbaren Halteelement (16) gehalten werden kann.

4. Feuerwerksbatterie (10) nach einem der vorhergehenden Ansprüche,
**dadurch gekennzeichnet,**
**dass** ein Ausklappwiderstand des zumindest einen Aufnahmeteils (11) und/oder des zumindest einen Erweiterungselements (15) durch eine Klebeverbindung, oder eine Perforierung, oder einen Faden herstellbar ist.

5. Feuerwerksbatterie (10) nach einem der vorhergehenden Ansprüche,
**dadurch gekennzeichnet,**
**dass** mindestens zwei Flächen von einem Aufnahmeteil (11) und/oder einem Erweiterungselement (15) eine Gehrung aufweisen können.

6. Feuerwerksbatterie (10) nach einem der vorhergehenden Ansprüche,
**dadurch gekennzeichnet,**
**dass** zumindest ein Erweiterungselement (15) nicht dieselbe Höhe (h) wie ein Aufnahmeteil (11) aufweist.

7. Feuerwerksbatterie (10) nach einem der vorhergehenden Ansprüche,
**dadurch gekennzeichnet,**
**dass** zumindest ein Erweiterungselement (15) aus einem Aufnahmeteil (11) herausfaltbar ist und/oder das Stützelement (12) aus einem Aufnahmeteil (11) und/oder einem Erweiterungselement (15) herausfaltbar ist.

8. Feuerwerksbatterie (10) nach einem der vorhergehenden Ansprüche,
**dadurch gekennzeichnet,**
**dass** zumindest ein Gelenkteil (14) eine Perforation aufweisen kann, wodurch die Umrandung (13) auftrennbar ist.

9. Feuerwerksbatterie (10) nach einem der vorhergehenden Ansprüche,
**dadurch gekennzeichnet,**
**dass** zumindest eine Zündschnur (40) an der Feuerwerksbatterie (10) angeordnet ist, wodurch der zumindest eine pyrotechnische Satz (20) entzündbar ist, insbesondere dass die Zündschnur (40) an einem Aufnahmeteil (11) und/oder an einem Erweiterungselement (15) anordbar ist, insbesondere dass das eine Zündschnurende (40.1) aus der Umrandung (13) herausragt.

10. Feuerwerksbatterie (10) nach einem der vorhergehenden Ansprüche,
**dadurch gekennzeichnet,**
**dass** durch die Zündschnur (40) zumindest zwei Aufnahmeteile (11) pyrotechnisch miteinander verbindbar sind, insbesondere dass die Zündschnur (40) durch zumindest ein Gelenkteil (14) führbar ist, sodass nur ein einmaliges Entzünden zum Start von einer Mehrzahl an pyrotechnischen Sätze (20) notwendig ist.

11. Feuerwerksbatterie (10) nach einem der vorhergehenden Ansprüche,
**dadurch gekennzeichnet,**
**dass** zumindest eine zweite Zündschnur (41) an einem Aufnahmeteil (11) und/oder an einem Erweiterungselement (15) anordbar ist, wobei das eine Zündschnurende (41.1) aus der Umrandung (13) herausragt.

12. Feuerwerksbatterie (10) nach einem der vorhergehenden Ansprüche,
**dadurch gekennzeichnet,**
**dass** in die Standfläche (30), insbesondere auf die Stützelemente (12), zumindest ein zusätzlicher pyrotechnischer Satz (20) aufnehmbar ist, insbesondere, dass zumindest ein weiterer pyrotechnischer Satz (20) durch zumindest ein Stützelement (12) und/oder ein Haltelement (21) fixierbar ist.

13. Feuerwerksbatterie (10) nach einem der vorhergehenden Ansprüche,
**dadurch gekennzeichnet,**
**dass** das Aufnahmeteil (11) und/oder das Erweiterungselement (15) in einem Bereich von 0° bis 180° zueinander bewegbar sind, insbesondere in einem Bereich von 30° bis 120°, vorzugsweise in einem Bereich von 45° bis 90°.

14. Verfahren zum Vergrößern der Standfläche (30) einer Feuerwerksbatterie (10), nach einem der vorhergehenden Ansprüche, aufweisend wenigstens ein Aufnahmeteil (11) für wenigstens einen pyrotechnischen Satz (20) mit einer Umrandung (13), welche über wenigstens ein Gelenkteil (14) mit einem weiteren Aufnahmeteil (11) und einem die Umrandung (13) weiterführenden Erweiterungselement (15) verbunden ist, das an einem Aufnahmeteil (11) angeordnet ist, wobei die Umrandung (13) durch sämtliche Außenflächen der Aufnahmeteile (11) und Erweiterungselemente (15) gebildet wird, wobei sich das Erweiterungselement (15) von einem Aufnahmeteil (11) dadurch unterscheidet, dass in dem Erweiterungselement (15) keine pyrotechnischen Sätze (20) angeordnet sind, wobei die Drehachse des Gelenkteils (14) vertikal zu einem Boden angeordnet ist,
wobei die Aufnahmeteile (11) und/oder die Erweiterungselemente (15) zueinander hin- bzw. voneinander wegbewegt werden, wodurch eine umrandete Standfläche (30) der Feuerwerksbatterie (10) vergrößert ist,
**dadurch gekennzeichnet, dass**
zumindest ein Aufnahmeteil (11) und/oder zumindest ein Erweiterungselement (15) mit zumindest einem klappbaren Stützelement (12) fixiert wird.

## Claims

1. A Firework battery (10) with at least one receiving element (11) for at least one pyrotechnic composition (20) and a frame (13), which is connected to at least one hinge element (14) with a further receiving element (11) and an extension element (15) continuing the frame (13), which is connected to a receiving element (11), whereby
the frame (13) is configured through all outer surfaces of the receiving elements (11) and extension elements (15), whereby
the extension element (15) differs from a receiving element (11) in that no pyrotechnic compositions (20) are arranged in the extension element (15), wherein
the axis of rotation of the hinge element (14) is arranged vertically to a bottom, wherein
the receiving elements (11) and/or the extension elements (15) are movable towards each other or away from each other, whereby
a framed standing surface (30) of the firework battery (10) is enlarged,
**characterized in that**,
the at least one receiving element (11) and/or at least one extension element (15) is fixable with at least one foldable support element (12).

2. The firework battery (10) according to claim 1,
**characterized in that**,
the standing surface (30) has a closed or an open frame (13).

3. The firework battery (10) according to any one of the preceding claims,
**characterized in that**,
at least the support element (12) is held by a foldable retaining element (16).

4. The firework battery (10) according to any one of the preceding claims,
**characterized in that**,
a fold-out resistance of the at least one receiving element (11) and/or of the at least one extension element (15) is established by means of an adhesive connection, or perforation, or a thread.

5. The firework battery (10) according to any one of the preceding claims,
**characterized in that**,
at least two surfaces of a receiving element (11) and/or an extension element (15) can have a miter.

6. The firework battery (10) according to any one of the preceding claims,
**characterized in that**,
at least one extension element (15) does not have the same height (h) as a receiving element (11).

7. The firework battery (10) according to any one of the preceding claims,
**characterized in that**,
at least one extension element (15) can be folded out of a receiving element (11) and/or
the support element (12) can be folded out of a receiving element (11) and/or an extension element (15).

8. The firework battery (10) according to any one of the preceding claims,
**characterized in that**,
at least one hinge element (14) can have a perforation, whereby the frame (13) is separable.

9. The firework battery (10) according to any one of the preceding claims,
**characterized in that**,
at least one ignition cord (40) is arranged on the firework battery (10), whereby the at least one pyrotechnic composition (20) is flammable, in particular that the ignition cord (40) is attachable to a receiving element (11) and/or to an extension element (15), in particular that one end of the ignition cord (40.1) protrudes from the frame (13).

10. The firework battery (10) according to any one of the preceding claims,
**characterized in that**,
at least two receiving elements (11) are pyrotechnically connectable by the ignition cord (40), in particular that the ignition cord (40) is guidable by at least a hinge element (14), so that only a single ignition is required to start a plurality of pyrotechnic compositions (20).

11. The firework battery (10) according to any one of the preceding claims,
**characterized in that**,
at least one second ignition cord (41) is attachable to a receiving element (11) and/or to an extension element (15), wherein
one end of the ignition cord (41.1) protrudes from the frame (13).

12. The firework battery (10) according to any one of the preceding claims,
**characterized in that**,
at least one additional pyrotechnic composition (20) can be accommodated in the standing surface, in particular to the support element (12), in particular that at least a further pyrotechnic composition (20) is fixable by at least one support element (12) and/or a retaining element (21).

13. The firework battery (10) according to any one of the preceding claims,
**characterized in that**,
the receiving element (11) and/or the extension element (15) is movable towards one another in an area from 0° to 180°, in particular in an area from 30° to 120°, preferably in an area from 45° to 90°.

14. A method for enlarging the standing surface (30) of a firework battery (10),
according to any one of the preceding claims, comprising
at least one receiving element (11) for at least one pyrotechnic composition (20) with a frame (13), which is connected via at least one hinge element (14) to a further receiving element (11) and an extension element (15) continuing the frame (13) which is arranged on a receiving element (11), the frame (13) being defined by all outer surfaces of the receiving element (11) and extension elements (15), wherein
the extension element (15) is distinguished from a receiving element (11) in that no pyrotechnic compositions (20) are arranged on the extension element (15), wherein
the axis of rotation of the hinge element (14) is vertical to a bottom, wherein
the receiving elements (11) and/or the extension elements (15) are movable towards each other or away from each other, whereby a framed standing surface (30) of the firework battery (10) is enlarged,
**characterized in that**,
at least one receiving element (11) and/or at least one extension element (15) is fixed with at least one hinged support element (12).

## Revendications

1. Batterie de feux d'artifice (10) avec au moins une partie réceptrice (11) pour au moins un composition pyrotechnique (20) et une bordure (13), qui est reliée par au moins une partie de charnière (14) à une autre partie réceptrice (11) et un élément d'extension (15) qui prolonge la bordure (13) et est disposé sur une partie réceptrice (11), dans lequel
la bordure (13) est formée par toutes les surfaces extérieures des parties réceptrices (11) et des éléments d'extension (15), dans lequel
l'élément d'extension (15) se distinguant ainsi d'une partie réceptrice (11), en ce qu'aucun composition pyrotechnique (20) n'est disposé dans l'élément d'extension (15),
l'axe de rotation de la partie de charnière (14) étant disposé verticalement par rapport à une base, les parties réceptrices (11) et/ou les éléments d'extension (15) peuvent être déplacés l'un vers l'autre ou peuvent être éloignés l'un de l'autre, de sorte qu'une surface d'appui (30) de la batterie de feux d'artifice (10) est agrandie,
**caractérisé en ce**
**qu'**au moins une partie réceptrice (11) et/ou au moins un élément d'extension (15) peuvent être fixés avec au moins un élément de support (12) articulé.

2. Batterie de feux d'artifice (10) selon la revendication 1,
**caractérisé en ce que**
la surface d'appui (30) comprend une bordure fermée ou ouverte (13).

3. Batterie de feux d'artifice (10) selon l'une des revendications précédentes,
**caractérisé en ce**
**qu'**au moins l'élément de support (12) peut être maintenu par un élément de maintien articulé (16).

4. Batterie de feux d'artifice (10) selon l'une des revendications précédentes,
**caractérisé en ce**
**qu'**une résistance au dépliage de la ou des parties réceptrices (11) et/ou du au moins un élément d'extension (15) au moyen d'un joint adhésif, ou perforation, ou un fil peut être produit.

5. Batterie de feux d'artifice (10) selon l'une des revendications précédentes,
**caractérisé en ce**
**qu'**au moins deux surfaces d'une partie réceptrice (11) et/ou d'un l'élément d'extension (15) comprennent une coupe d'onglet.

6. Batterie de feux d'artifice (10) selon l'une des revendications précédentes,
**caractérisé en ce**
**qu'**au moins un élément d'extension (15) n'a pas la même hauteur (h) qu'une partie réceptrice (11).

7. Batterie de feux d'artifice (10) selon l'une des revendications précédentes,
**caractérisé en ce**
**qu'**au moins un élément d'extension (15) peut être replié à partir d'une partie réceptrice (11) et/ou l'élément de support (12) peut être replié à partir d'une partie réceptrice (11) et/ou d'un l'élément d'extension (15).

8. Batterie de feux d'artifice (10) selon l'une des revendications précédentes,
**caractérisé en ce**
**qu'**au moins une partie charnière (14) peut comprend une perforation, par lequel la bordure (13) est séparable.

9. Batterie de feux d'artifice (10) selon l'une des revendications précédentes,
**caractérisé en ce**
**qu'**au moins un cordon fusible (40) peut être disposé sur la batterie de feux d'artifice (10),
dans lequel la ou les compositions pyrotechniques (20) sont inflammables, en particulier le cordon fusible (40) peut être fixé à une partie réceptrice (11) et/ou à un élément d'extension (15), en particulier qu'une extrémité du cordon de fusibles (40.1) dépasse de la bordure (13).

10. Batterie de feux d'artifice (10) selon l'une des revendications précédentes,
**caractérisé en ce**
**qu'**au moins deux parties réceptrices (11) peuvent être connectés pyrotechniquement par le cordon fusible (40), en particulier que le cordon fusible (40) peut être guidée par le ou les parties charnières (14), de sorte qu'un seul allumage est nécessaire pour démarrer un pluralité des compositions pyrotechniques (20).

11. Batterie de feux d'artifice (10) selon l'une des revendications précédentes,
**caractérisé en ce**
**qu'**au moins un deuxième cordon fusible (41) peut être fixé à une partie réceptrice (11) et/ou à un élément d'extension (15), dans lequel une extrémité du cordon de fusible (41.1) est dépasse de la bordure (13).

12. Batterie de feux d'artifice (10) selon l'une des revendications précédentes,
**caractérisé en ce**
**qu'**au moins un composition pyrotechnique supplémentaire (20) peut être logé dans la surface d'appui (30), en particulier sur les éléments de support (12), en particulier qu'au moins un autre composition pyrotechnique (20) peut être fixé par au moins un élément de support (12) et/ou un élément de maintien (21).

13. Batterie de feux d'artifice (10) selon l'une des revendications précédentes,
**caractérisé en ce que**
la partie réceptrice (11) et/ou l'élément d'extension (15) sont mobiles dans une plage de 0° à 180° l'un par rapport à l'autre, notamment dans une plage de 30° à 120°, de préférence dans une plage de 45° à 90°.

14. Procédé pour agrandir la surface d'appui (30) d'une batterie de feux d'artifice (10),
selon l'une des revendications précédentes, comprenant
au moins une partie réceptrice (11) pour au moins un composition pyrotechnique (20) et une bordure (13), qui est reliée par au moins une partie de charnière (14) à une autre partie réceptrice (11) et un élément d'extension (15) qui prolonge la bordure (13) et est disposé sur une partie réceptrice (11), dans lequel
la bordure (13) est formée par toutes les surfaces extérieures des parties réceptrices (11) et des éléments d'extension (15), dans lequel
l'élément d'extension (15) se distinguant ainsi d'une partie réceptrice (11), en ce qu'aucun composition pyrotechnique (20) n'est disposé dans l'élément d'extension (15),
l'axe de rotation de la partie de charnière (14) étant disposé verticalement par rapport à une base, les parties réceptrices (11) et/ou les éléments d'extension (15) peuvent être déplacés l'un vers l'autre ou peuvent être éloignés l'un de l'autre, de sorte qu'une surface d'appui (30) de la batterie de feux d'artifice (10) est agrandie,
**caractérisé en ce**
**qu'**au moins une partie réceptrice (11) et/ou au moins un élément d'extension (15) peuvent être fixés avec au moins un élément de support (12) articulé.
